# FASCICULE DE BREVET EUROPEEN

(11) **EP 1 127 758 B1**
(45) Date de publication et mention de la délivrance du brevet: **21.01.2004**
(21) Numéro de dépôt: 01400459.2
(22) Date de dépôt: 20.02.2001
(51) Int. Cl.: B60R 25/02

(54) **Système d'antivol électronique pour véhicule automobile**
Elektronisches Diebstahlsicherungssystem für Kraftfahrzeuge
Electronic anti-theft system for vehicles

(30) Priorité: 23.02.2000 FR 0002274
(43) Date de publication de la demande: 29.08.2001
(73) Titulaire: VALEO SECURITE HABITACLE S.A.S., 94042 Créteil Cédex (FR)
(72) Inventeur: Barbier, Stéphane, 91640 Briis sous Forges (FR); Giacomin, Fabrice, 58240 Saint Pierre le Moutier (FR); Canard, Louis, 58000 Nevers (FR)
(74) Mandataire: Hervouet, Sylvie

(56) Documents cités:
- EP-A- 0 742 127
- WO-A-99/14085
- FR-A- 2 748 710
- FR-A- 2 767 767
- GB-A- 2 344 090

## Description

La présente invention concerne un système d'antivol de véhicule automobile du type comprenant un mécanisme d'antivol comportant un boîtier dans lequel un organe, notamment une clef, de commande manuelle du démarrage du moteur du véhicule et du verrouillage de la colonne de direction du véhicule est introduit et est utilisé pour, d'une part obtenir un déverrouillage, ou libération, en rotation d'un arbre de la colonne de direction du véhicule et, d'autre part, commander le démarrage du moteur, et inversement l'arrêt du moteur et le verrouillage ou blocage à nouveau de l'arbre de la colonne de direction. Un dispositif selon le préambule de la revendication 1 est connu.

Plus particulièrement, l'organe de commande manuelle est monté mobile axialement entre une position, arrière tirée, de verrouillage de la colonne de direction et une position, avant poussée, de déverrouillage de la colonne de direction.

Il est monté à rotation entre au moins une position angulaire de repos et une position angulaire d'utilisation, par exemple de démarrage ou de fonctionnement du moteur, dans laquelle il ne peut être tiré axialement vers l'arrière afin d'éviter un blocage accidentel de la colonne de direction lors de l'utilisation, et notamment lors du roulage du véhicule.

L'organe de commande manuelle est lié en rotation à un organe de sortie rotatif formant came qui est susceptible de coopérer avec un doigt de commande porté par un pêne pour commander les déplacements de ce dernier qui est monté coulissant dans le boîtier, entre une position sortie d'antivol vers laquelle il est sollicité élastiquement et dans laquelle il fait saillie à travers une ouverture du boîtier pour bloquer en rotation un organe de la colonne de direction lorsque l'organe de commande est en position angulaire de repos et en position arrière tirée de verrouillage, et une position rentrée escamotée à l'intérieur du boîtier.

Enfin, il est lié en rotation à un ensemble commutateur/interrupteur à plusieurs positions, pour l'alimentation de différents circuits électriques correspondants qui sont le plus souvent au nombre de quatre. parmi lesquelles on distingue successivement une position "STOP" (correspondant à la position angulaire extrême de repos de l'organe de commande manuelle), une position "+ACCESSOIRES", une position "+CONTACT" et une position "DEMARRAGE" (correspondant à l'autre position angulaire extrême opposée).

Selon une conception dite "mécanique" d'un tel système d'antivol, l'organe de commande manuelle est une clef dont la tige est reçue axialement dans le barillet d'un verrou qui permet, lorsque la clef est une clef conforme, d'entraîner en rotation un rotor de sortie pour la commande du pêne d'antivol et de l'interrupteur rotatif à plusieurs positions.

Les évolutions successives d'un te! type d'antivol ont abouti à des conceptions particulièrement fiables et compactes, l'ensemble du mécanisme d'antivol avec son verrou pouvant notamment être reçu en un seul bloc dans un tube adjacent à la colonne de direction de dimensions réduites avec notamment, dans le cas des produits commercialisés par le demandeur, un diamètre interne de l'ordre d'environ 35 mm.

Le souhait général des constructeurs de véhicules automobiles de standardiser les composants et les équipements au sein d'une gamme de véhicules, et pour les différentes versions d'un même modèle, aboutit notamment à standardiser la conception générale de la colonne de direction et de son mécanisme d'antivol, et plus particulièrement la conception de l'ensemble électromécanique came-pêne-interrupteur qui répond de plus à un ensemble de normes légales qui compliquent par ailleurs sa conception et son homologation.

Toutefois, il est aussi apparu souhaitable d'équiper certains véhicules de systèmes d'antivol plus fiables, dits "inviolables", tout en améliorant le confort d'utilisation et notamment l'ergonomie de manipulation et en respectant la normalisation qui impose le recours à un organe de commande manuel mobile axialement et en rotation pour assurer les cycles de manoeuvre mentionnés précédemment.

Dans un tel type d'antivol "électronique", le codage de l'antivol n'est plus obtenu par l'appariement d'une clef conforme et d'un verrou à barillet, mais il est obtenu par un dispositif électronique d'identification qui comporte notamment un identifiant électronique appartenant à l'utilisateur autorisé et une unité d'identification d'un utilisateur autorisé du véhicule, embarquée à bord du véhicule, qui fournit un signai codé d'antivol lorsque l'identifiant conforme est reconnu.

Le dispositif électronique est du type dit "mains libres" lorsque l'ensemble des étapes d'interrogation et de reconnaissance ou d'identification est effectué sans que l'utilisateur n'ait à effectuer aucune manoeuvre ou action particulière autre que celles lui permettant de pénétrer dans le véhicule.

Il peut aussi être du type dans lequel l'utilisateur dispose d'un identifiant en forme de badge qu'il introduit manuellement dans un boîtier à bord du véhicule.

On a ainsi proposé des conceptions dans lesquelles l'organe de commande manuelle du mécanisme d'antivol est un bouton de commande remplaçant la clef et qui est à demeure sur le véhicule, et dans lesquelles il est associé à un organe motorisé, notamment électromagnétique, de blocage en rotation du bouton de commande dont l'effacement ou l'escamotage en vue de libérer le bouton est commandé par un circuit électronique de commande lorsqu'un signal codé d'antivol est fourni par l'unité d'identification.

Différents exemples d'une telle conception sont par exemple décrits et représentés dans le document EP-A-0.742.127. On note toutefois que ces exemples ne sont pas conformes à la législation car le blocage ou la libération de l'arbre de la colonne de direction ne sont pas provoqués par déplacement axial du bouton de manoeuvre.

Un autre exemple est décrit et représenté dans le document WO-A-99/14085 dans lequel l'organe de commande manuelle est d'une conception conforme à la normalisation selon laquelle il est nécessaire de le manipuler axialement et en rotation pour libérer ou bloquer l'arbre de la colonne de direction. On remarque toutefois que l'ergonomie générale du système n'est pas satisfaisante pour l'utilisateur car il lui est impossible de déterminer si le blocage en rotation du bouton de manoeuvre résulte d'un défaut de fonctionnement du système d'identification et/ou de l'identification.

D'une manière générale, l'ergonomie n'est pas homologue, pour l'utilisateur, de celle d'un antivol "mécanique" auquel il a pu être habitué et dans lequel l'introduction de la clef dans le verrou puis le début de la rotation correspondent à une étape d'identification.

Afin de remédier à ces inconvénients, tout en présentant une très grande compacité permettant l'adaptation aisée sur un même véhicule d'un système mécanique ou électronique, l'invention propose un système d'antivol de véhicule automobile du type comprenant un mécanisme d'antivol comportant un boîtier dans lequel un organe de commande manuelle du démarrage du moteur du véhicule et du verrouillage de la colonne de direction du véhicule :
- est monté mobile axialement entre une position, arrière tirée, de verrouillage de la colonne de direction et une position, avant poussée, de déverrouillage de la colonne de direction,
- est monté à rotation entre au moins une position angulaire de repos et une position angulaire d'utilisation (notamment de démarrage du moteur), dans laquelle dans laquelle il ne peut être tiré axialement vers l'arrière
- est lié en rotation à un organe de sortie rotatif formant came qui est susceptible de coopérer avec un doigt de commande porté par un pêne pour commander les déplacements de ce dernier qui est monté mobile par rapport au boîtier, entre une position sortie d'antivol vers laquelle il est sollicité élastiquement et dans laquelle il fait saillie à travers une ouverture du boîtier pour bloquer en rotation un organe de la colonne de direction lorsque l'organe de commande est en position angulaire de repos et en position arrière tirée de verrouillage, et une position rentrée escamotée à l'intérieur du boîtier,
- et est lié en rotation à un ensemble ccmmutateur/interrupteur,
caractérisé en ce qu'il comprend une unité d'identification d'un utilisateur autorisé du véhicule qui, à l'issue d'une étape d'interrogation et d'identification, émet un signal codé d'antivol,
et en ce que le mécanisme d'antivol comporte :
- un organe motorisé, notamment électromagnétique, de blocage en rotation de l'organe de commande par rapport au boîtier dont la libération est commandée lorsqu'un signal codé d'antivol est fourni par l'unité d'identification à un circuit électronique de commande de l'organe de blocage ;
- et un commutateur, de déclenchement d'une étape d'interrogation et d'identification, qui est porté par le boîtier et qui est déclenché par l'organe de commande manuelle.

Selon d'autres caractéristiques de l'invention :
- l'organe de commande manuelle comporte une rampe inclinée axialement de commande du commutateur de déclenchement qui agit sur un organe d'actionnement de ce dernier lorsque l'organe de commande manuelle est enfoncé ou tiré axialement entre ses deux positions axiales extrêmes arrière tirée de verrouillage et avant poussée de déverrouillage ;
- il est prévu des moyens d'indexation axiale de l'organe de commande manuelle dans chacune de ses deux postions axiales extrêmes ,
- le commutateur de déclenchement comporte un organe d'actionnement sur lequel agit l'organe de commande manuelle lorsqu'il est entraîné en rotation depuis sa position angulaire extrême de repos vers sa position d'utilisation, ou dans le sens inverse ;
- l'organe d'actionnement est une bille d'actionnement avec laquelle coopère la rampe de commande ou un flanc latéral de l'organe de commande ;
- la rampe de commande se prolonge axialement vers l'arrière par un palier cylindrique parallèle à l'axe et qui est délimité latéralement par ledit flanc latéral ;
- l'organe de commande comporte un rotor qui est monté tournant par rapport au boîtier formant stator, entre deux positions angulaires extrêmes dont l'une correspond à ladite position angulaire de repos, et qui est immobilisé axialement par rapport au stator et une tige de commande qui est montée coulissante axialement par rapport au rotor, auquel elle est liée en rotation, entre une position arrière tirée de verrouillage et une position extrême avant de déverrouillage ;
- ladite rampe est formée sur la tige de commande ;
- il est prévu des moyens d'indexation axiale de la tige de commande par rapport au rotor dans chacune de ses deux postions axiales extrêmes ;
- la tige de commande comporte un doigt radial de retenue axiale de la tige de commande en position avant poussée qui, lorsque le rotor quitte sa position angulaire de repos, s'étend en regard d'une face transversale annulaire avant de butée du stator pour empêcher le recul axial vers l'arrière de la tige de commande et qui, lorsque le rotor est dans sa position angulaire de repos, est en regard d'une rainure axiale complémentaire de manière à permettre les déplacements axiaux de la tige de commande, dans les deux sens, entre ses deux positions axiales extrêmes
- l'organe électromagnétique de blocage en rotation de l'organe de commande coopère avec le rotor pour le bloquer en rotation ;
- l'organe électromagnétique de blocage est un électroaimant d'orientation axiale dont le noyau est sollicité élastiquement en position sortie par un ressort de rappel de manière à être reçu dans au moins une encoche de blocage formé dans un élément lié en rotation avec l'organe de commande lorsque ce dernier est dans sa position angulaire de repos, et il est susceptible d'être rappelé électromagnétiquement en position rentrée de manière à libérer l'organe de commande en rotation ;
- l'encoche de blocage est formée dans une face annulaire avant du rotor de l'organe de commande manuelle ;
- l'organe électromagnétique de blocage et le commutateur de déclenchement appartiennent à un sous-ensemble constituant une partie démontable du boîtier ;
- la partie démontable est de forme générale annulaire et est traversée axialement en son centre par l'organe de commande manuelle ;
- la partie démontable comporte une plaque à circuits imprimés en forme d'anneau plat d'orientation transversale qui porte ledit commutateur et l'organe électromagnétique de blocage ;
- le pêne est monté coulissant axialement parallèlement à la direction de déplacement axial de l'organe de commande manuelle ;
- le pêne est monté coulissant selon une direction globalement radiale par rapport à la direction de déplacement axial de l'organe de commande manuelle ;
- l'extrémité axiale arrière de la tige de commande est liée en translation axiale et en rotation avec un bouton de manoeuvre par des moyens fusibles sous l'action d'un couple de valeur déterminée.

D'autres caractéristiques et avantages de l'invention apparaîtront à la lecture de la description qui va suivre pour la compréhension de laquelle on se reportera aux dessins annexés dans lesquels :
- la figure 1 est une vue générale, de trois-quarts arrière et en perspective éclatée, des principaux composants d'un système d'antivol conforme aux enseignements de l'invention ;
- la figure 2 est une vue similaire à celle de la figure 1 sur laquelle les composants sont représentés en position assemblée ;
- la figure 3 est une vue à plus grande échelle et en section par un plan axial médian du stator formant boîtier et du module complémentaire en forme de cassette qui porte l'électroaimant de blocage et son circuit électronique de commande ;
- la figure 4 est une vue similaire à celle de la figure 1 qui illustre à plus grande échelle les principaux composants de la figure 1 ;
- la figure 5 est une vue similaire de la figure 4 sur laquelle les composants représentés sont illustrés en perspective de trois-quarts avant ;
- la figure 6 est une vue à grande échelle et en perspective de trois-quarts avant qui illustre le stator avec le rotor en position angulaire de repos et la tige de commande manuelle en position axiale avant poussée ;
- la figure 7 est une vue à grande échelle et en perspective de trois-quarts avant qui illustre le rotor ;
- la figure 8 est une vue axiale arrière en bout, selon le flèche F8 de la figure 6, sur laquelle sont représentés le stator et la cassette en position éclatée ,
- la figure 9 est une vue similaire à celle de la figure 8 sur laquelle la cassette est en position montée dans le stator, sans la tige de commande manuelle. en position angulaire de repos ;
- la figure 10A est une vue, en section par le plan transversal 10-10 des figures 6 et 14A. qui illustre le stator avec le rotor et la tige de commande manuelle en position angulaire extrême de repos ;
- la figure 10B est une vue similaire à celle de la figure 10A sur laquelle le rotor et la tige de commande manuelle sont en position angulaire extrême de démarrage ;
- la figure 11A est une vue, en section par le plan transversal 11-11 des figures 6 et 14A, qui illustre le rotor en position angulaire extrême de repos, la tige de commande manuelle en position arrière tirée, ainsi que le commutateur à bille du circuit électronique de commande ;
- la figure 11 B est une vue similaire à celle de la figure 11A qui illustre le rotor en position angulaire extrême de repos et la tige de commande manuelle en position avant poussée ;

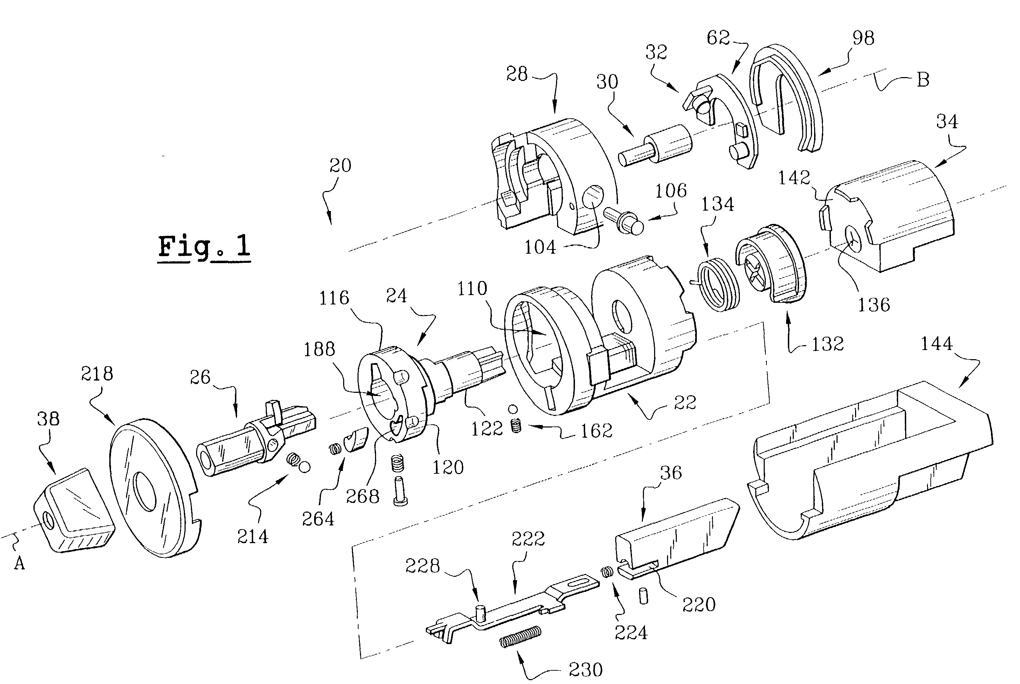

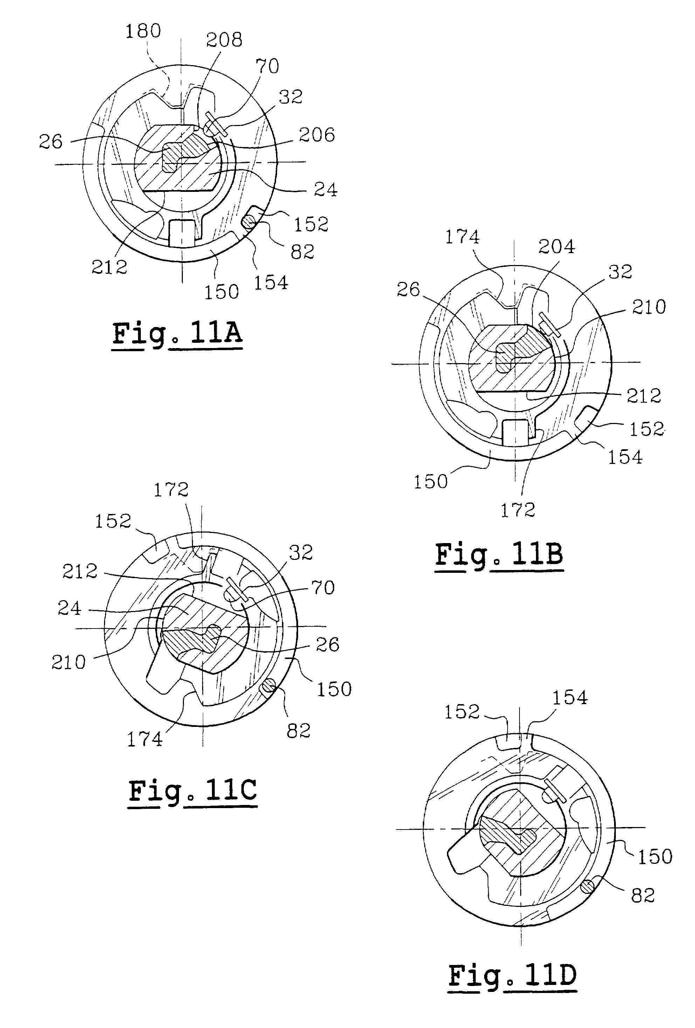

- la figure 1 1 C est une vue similaire à celle de la figure 11A qui illustre le rotor en position angulaire extrême de démarrage et la tige de commande manuelle en position avant poussée ;
- la figure 11D est une vue similaire à celle de la figure 11A qui illustre le rotor en position angulaire intermédiaire de marche du moteur du véhicule et la tige de commande manuelle en position avant poussée ;

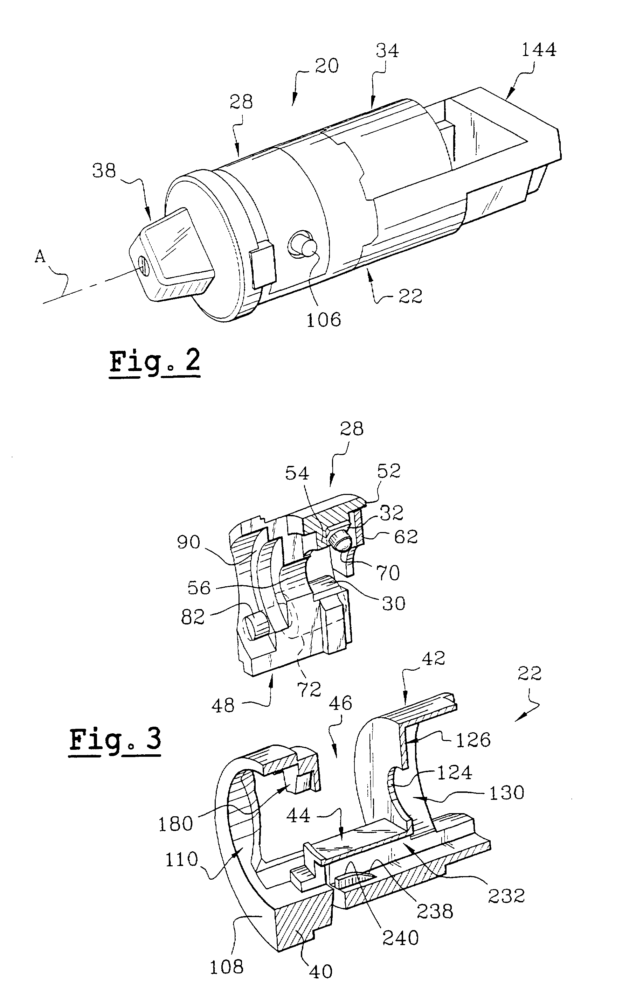

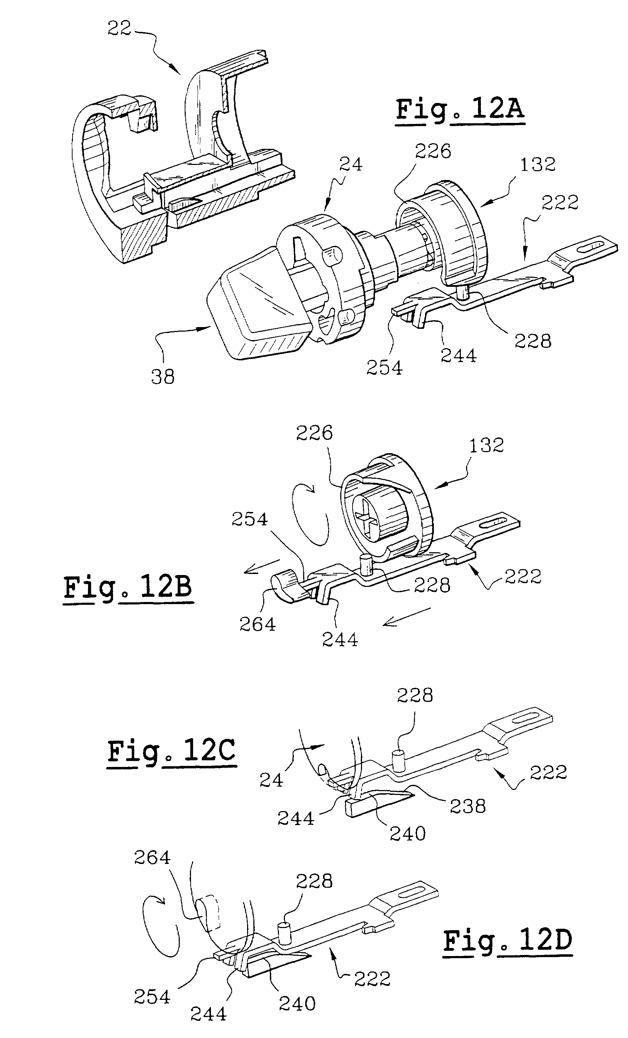

- la figure 12A est une vue similaire à celle des figure 1 et 3 qui représente, en éclaté, une partie du stator et le rotor assemblé avec la tige de commande et l'organe de sortie formant came de commande des déplacements axiaux du pêne qui agit sur la queue de ce dernier, le rotor étant en position angulaire extrême de repos avec la tige de commande manuelle en position arrière tirée et le pêne en position sortie d'antivol ;
- la figure 12B est une vue partielle similaire à celle de la figure 12A sur laquelle la queue de pêne est en position rentrée ;
- les figures 12C et 12D sont des vues similaires à celles des figures 12A et 12B qui illustrent d'autres positions relatives du rotor, du stator et de la queue de pêne ;

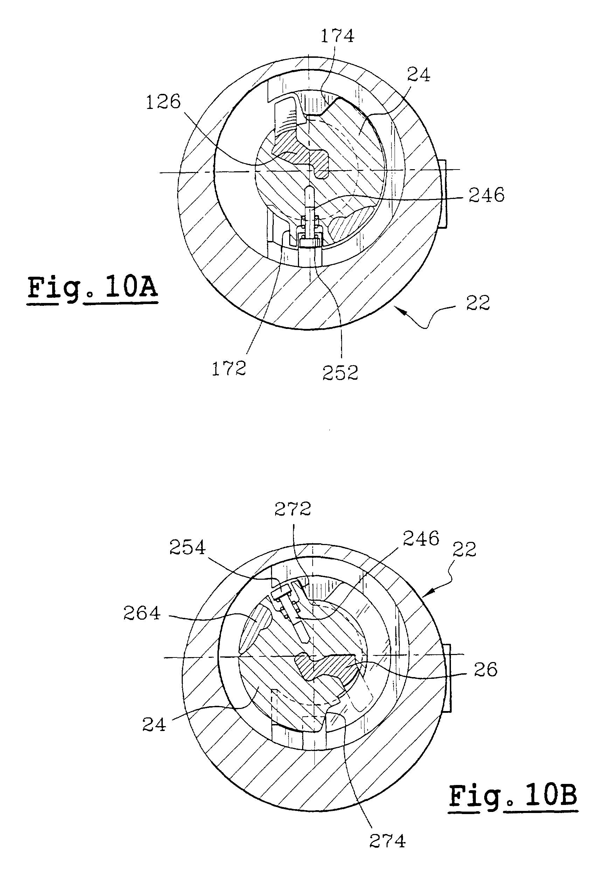

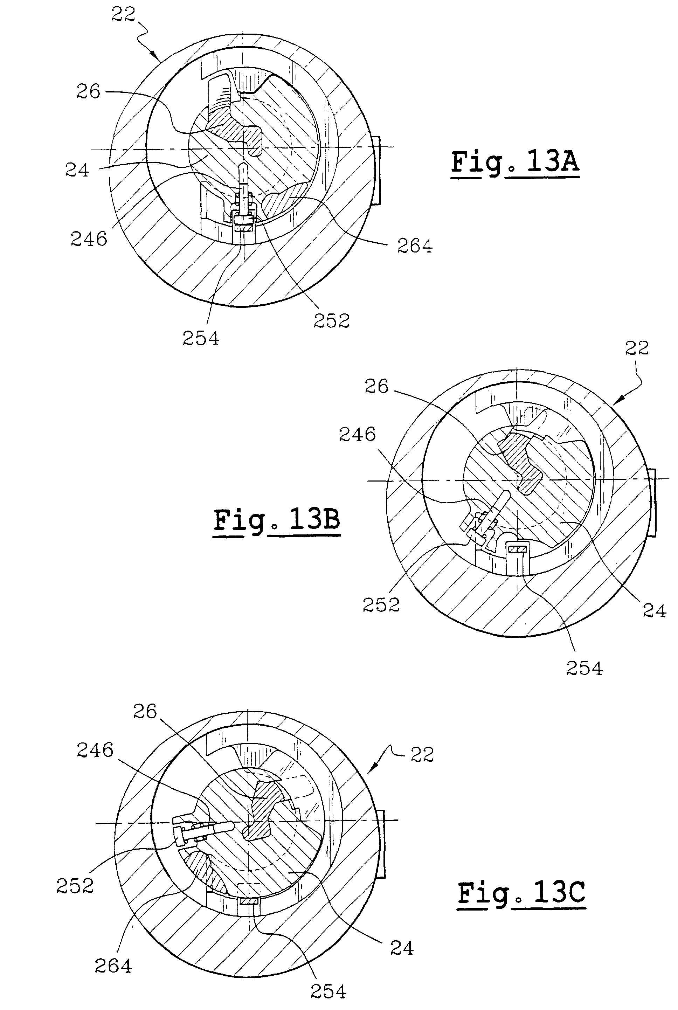

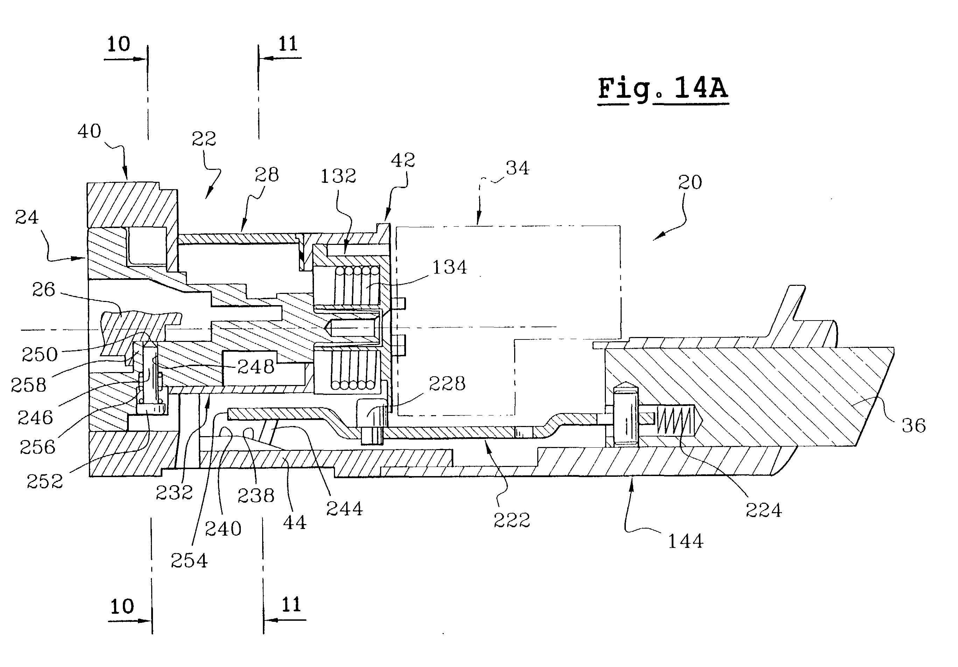

- la figure 13A est une vue en section transversale similaire à celles des figures 10A et 10B, qui représente l'extrémité arrière de la queue de pêne dans sa position correspondant aux figures 12B et 14A ;
- la figure 13B est une vue similaire à celle de la figure 13A qui représente l'extrémité arrière de la queue de pêne dans sa position correspondant à la figure 12C ;
- la figure 13C est une vue similaire à celle de la figure 13A qui représente l'extrémité arrière de la queue de pêne dans sa position correspondant à la figure 12D ;
- la figure 14A est une vue simplifiée en section axiale des principaux composants du système d'antivol selon l'invention sur laquelle le pêne est en position axiale avant sortie ;

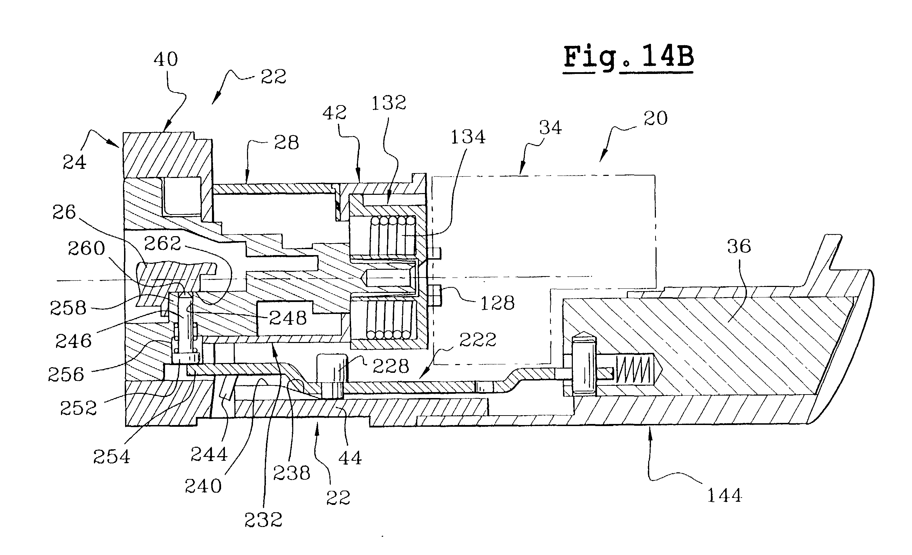

- la figure 14B est une vue similaire à celle de la figure 14A sur laquelle le pêne est en position axiale arrière rentrée ;

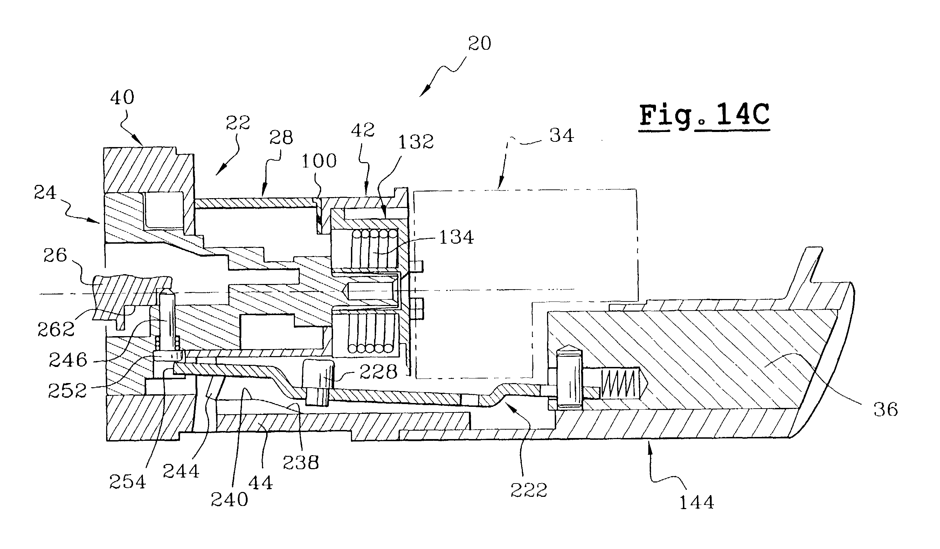

- et la figure 14C est une vue similaire à celle de la figure 14A sur laquelle le pêne est en position axiale intermédiaire en cours de déverrouillage.

Comme on peut le voir notamment à la figure 2, l'antivol 20 selon l'invention constitue un ensemble particulièrement compact qui peut être intégré aisément dans un ensemble de colonne de direction de conception générale connue, et ceci en lieu et place d'un antivol "mécanique" selon l'état de la technique. Dans le mode de réalisation illustrée aux figures dans lequel le pêne est coulissant axialement selon l'axe général de l'antivol, le corps de ce dernier est globalement cylindrique et son diamètre externe est d'environ 34 mm, c'est à dire du même diamètre que le corps de l'antivol mécanique fourni par le demandeur à ses principaux clients constructeurs automobiles

Par convention, et à titre non limitatif, on adoptera dans la suite de la description et dans 'es revendications une orientation d'arrière en avant selon l'axe général A de l'antivol, et ceci de la gauche vers la droite en considérant les figures 1 et 2.

L'antivol 20 est constitué pour l'essentiel d'un corps fixe ou stator de forme générale cylindrique externe 22, d'un organe de commande manuelle en deux parties, comportant un rotor 24 et une tige de commande 26, d'un sous-ensemble fixe constituant un module, ou cassette 28, rapporté dans le stator 22 et qui comporte notamment un électroaimant monostable 30 et un commutateur électrique 32 selon l'invention, un interrupteur rotatif 34 à positions multiples lié en rotation au rotor, et un pêne 36 de blocage en rotation d'un arbre de colonne de direction qui n'est pas représenté sur les figures.

Pour sa manipulation, l'organe de commande manuelle en deux parties 24 et 26, est associé à un bouton arrière 38 de manipulation qui est lié en rotation et en translation axiale, dans les deux sens, à l'extrémité libre arrière de la tige de commande 26 de manière à entraîner cette dernière en rotation et en translation axiale dans les deux sens autour et selon l'axe A par rapport au stator fixe 22.

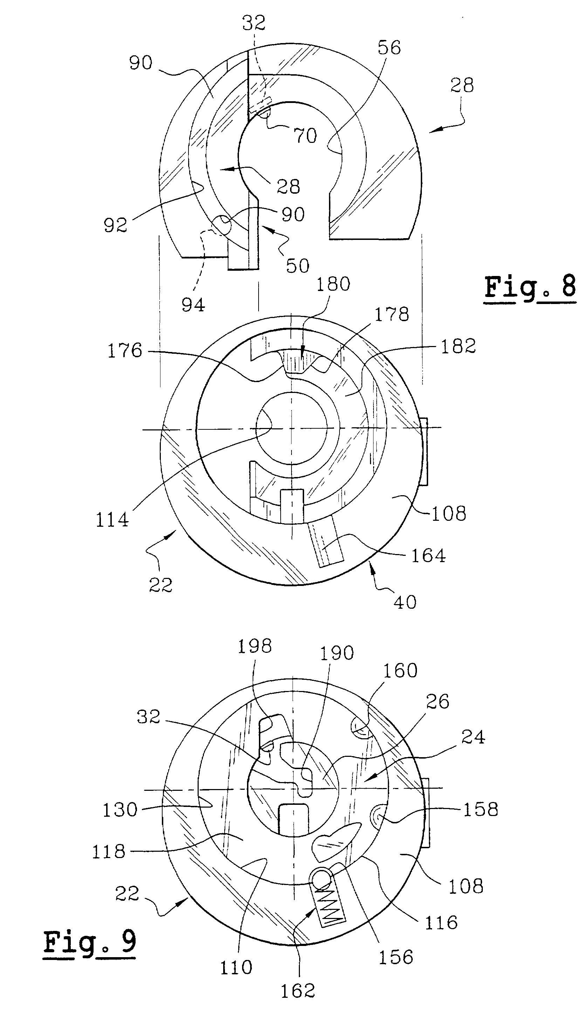

Comme on peut le voir par exemple à la figure 9, l'axe fonctionnel A de rotation du rotor 24 est excentré par rapport à l'axe géométrique central du corps cylindrique, et notamment du stator 22 et de la cassette 28, et ceci notamment pour disposer de suffisamment de place pour le pêne 36 avec sa tirette.

Le stator fixe 22 est une pièce moulée, par exemple en alliage léger, qui comporte un tronçon arrière 40 de forme générale annulaire cylindrique, et un tronçon avant 42 de même forme et qui sont reliés axialement entre eux par un tronçon intermédiaire 44 en forme de poutre périphérique de liaison d'orientation axiale Il existe ainsi un évidement ou cavité intermédiaire 46 entre les tronçons arrière 40 et avant 42 qui est ouvert radialement sur la plus grande partie de sa circonférence et qui reçoit la cassette 28 de forme générale complémentaire

Plus précisément, le corps 48 de la cassette 28 est une pièce en alliage moulé de forme générale cylindrique annulaire comportant un évidement 50, inférieur en considérant les figures 1 , 4 et 5, qui est complémentaire du profil externe de la poutre de liaison 44 de manière à compléter la forme générale du stator et pour être positionné et immobilisé, angulairement et axialement, par rapport au stator 22.

La cassette 28 comporte essentiellement une jupe périphérique avant 52, une cloison intermédiaire 54 d'orientation radiale avec un trou central 56, et un bloc arrière 58 qui s'étend sur environ une demi-circonférence.

La jupe avant 52 délimite avec la cloison 54 un logement ou cavité avant 60 de la cassette 28 qui reçoit notamment une plaque transversale à circuits imprimés 62 qui est un secteur d'anneau plat d'orientation radiale qui porte notamment sur sa face transversale arrière 64 des composants électroniques et/ou électromécaniques parmi lesquels le commutateur électrique 32 et l'électroaimant 30.

Le commutateur électrique 32 comporte un organe de commande de son déclenchement qui est une bille sphérique 70, le positionnement du commutateur 32 avec sa bille 70 étant tels que la bille fait globalement saillie radialement vers l'intérieur du trou 56, comme on peut le voir notamment aux figures 8 et 9.

L'électroaimant 30 est un électroaimant d'orientation axiale avec un corps cylindrique fixe 72 dont l'axe B est parallèle à l'axe A, mais excentré radialement vers l'extérieur par rapport à l'axe A.

La face avant 74, avec ses raccordements électriques, est fixée à la face transversale arrière 64 de la plaque 62, tandis que son corps 72 s'étend dans un logement complémentaire 76 du corps de la cassette dont le fond avant 78 comporte un trou axiai 80 de plus petit diamètre pour permettre le passage en coulissement axial de la tige 82 de sortie de l'électroaimant qui est liée au noyau mobile 84 de ce dernier qui comporte un ressort de rappel 86 qui le sollicite en permanence vers sa position axiale arrière sortie, c'est à dire lorsque l'enroulement de l'électroaimant 28 n'est pas alimenté électriquement.

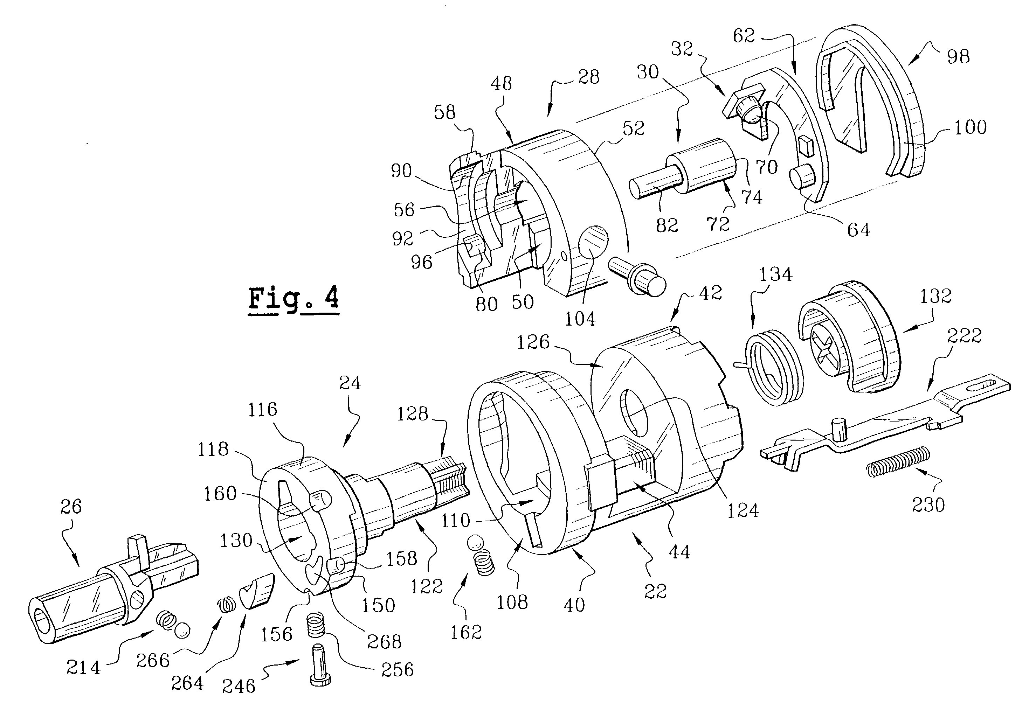

Comme on peut le voir notamment à la figure 4, le trou axial 80 débouche axialement vers l'arrière dans une facette transversale annulaire arrière 90 et qui se prolonge en partie dans une portion de face latérale cylindrique concave 92 sous la forme d'un évidement 94.

En position rentrée axialement vers l'avant de la tige 82, lorsque l'électroaimant 30 est alimenté, celle-ci est escamotée en arrière de la facette 90 tandis que, en position sortie et comme on peut le voir à la figure 3, l'extrémité libre arrière de la tige 82 est reçue dans l'évidement 94 dont le fond transversal arrière 96 constitue une butée de fin de course pour la tige 82.

La cavité avant 60, qui est ouverte axialement vers l'avant pour permettre le montage et la fixation de la plaque 62 avec ses composants, peut être fermée par un couvercle rapporté 98 qui comporte une nervure de positionnement et de centrage 100.

En position assemblée de la cassette 28 dans le logement intermédiaire 46, le couvercle 98 est notamment maintenu axialement par la face transversale arrière 102 du tronçon avant 42.

La paroi périphérique cylindrique convexe du tronçon arrière 40 du corps de la cassette 28 comporte aussi, de manière générale connue, un trou radial 104 qui reçoit un doigt radial 106 de fixation et d'immobilisation axiale et en rotation du stator 22-28 dans un tube complémentaire, non représenté, de la colonne direction qui reçoit l'antivol 20

La face transversale arrière 108 du tronçon arrière 40 du stator 22 comporte un logement cylindrique 110, ouvert axialement vers l'arrière et délimité vers l'avant par le fond 112 percé en son centre d'un trou circulaire 114, qui reçoit en rotation le tronçon complémentaire arrière 116, de forme cylindrique convexe, du rotor 24.

Le tronçon arrière 116 est délimité par une face transversale arrière 118 qui est affleurante à la face 108 (voir figures 14A et suivantes), et par une face transversale annulaire avant 120 qui, en position montée du rotor est en appui axial contre la face arrière du fond 112.

Au-delà de la face avant 120 de son tronçon arrière 116, le rotor 24 se prolonge par une queue centrale coaxiale 122 qui s'étend axialement à travers le trou 114, à travers la cassette 28 et son trou 56, et à travers le trou central 124 du fond transversal arrière 126 du tronçon avant 42 du stator 22.

Ainsi, l'extrémité libre avant 128 de la queue 122, conformée en croix d'entraînement, s'étend axialement à l'intérieur du tronçon avant 42 du stator 22, qui est cylindrique creux et ouvert axialement vers l'avant, pour constituer une cavité 130 dans laquelle est agencée, de manière connue, une came 132 (entraînée en rotation par la croix 128) qui commande les déplacements axiaux du pêne 36 selon une conception connue.

Un ressort 134 de rappel angulaire de la came et du rotor 24-122, lorsque le rotor atteint la position angulaire extrême déterminée "DEMARRAGE" correspondant à l'alimentation du démarreur du moteur, est interposé axialement entre le stator 22-42 et la came 132.

La croix 128 traverse centralement la came 132 pour être reçue dans une empreinte complémentaire 136 de l'interrupteur rotatif 34 pour entraîner cet interrupteur à positions multiples en rotation dans les deux sens.

Le corps de l'interrupteur 34 est immobilisé en rotation par des pattes 140 du stator 22-42 qui sont reçues dans des encoches 142 de l'interrupteur 34 qui est reçu dans une coque complémentaire 144 dans laquelle le pêne 36 est guidé en coulissement axial selon un axe C parallèle à l'axe A et excentré radialement vers l'extérieur.

Comme on peut le voir notamment à la figure 14A, la coque 144 comporte un couloir 146 de guidage du pêne 36 qui débouche axialement à ses deux extrémités.

La face transversale avant 120 du tronçon arrière 116 du rotor 24 comporte une rainure annulaire périphérique 150 en arc de cercle qui se prolonge par une encoche adjacente 152 dont elle est séparée par une cloison de butée 154. Le rayon moyen de la rainure 150 et de l'encoche 152 est tel qu'elles sont situées au droit de l'axe B de l'électroaimant 30 dont la tige 82, et plus précisément son extrémité libre arrière, est susceptible d'être reçue dans la rainure circulaire 150, ou dans l'encoche 152, en fonction de la position angulaire du rotor par rapport au stator 22, et notamment par rapport à la cassette 28.

A cet effet. le tronçon arrière 116 est adjacent à la facette 90 et à la surface cylindrique concave 92.

La périphérie cylindrique du tronçon 116 comporte ici trois encoches 156, 158 et 160 d'indexation angulaire du rotor 24 par rapport au stator 22-40, dans trois positions angulaires privilégiées correspondant respectivement aux positions "STOP", "ACCESSOIRES" et "MARCHE" de l'interrupteur rotatif 34. Le mécanisme d'antivol 22 comporte à cet effet un ensemble 162 à bille et ressort d'orientation radiale.

Sur sa face transversale avant 120, le rotor 22 comporte une douille 166 qui s'étend axialement vers l'avant et qui est prolongée par un manchon 168 qui est guidé en rotation dans le trou 114

Grâce à cet agencement, ia périphérie cylindrique 170 de la douille 162 est délimitée angulairement par deux butées radiales 172 et 174 qui sont susceptibles de coopérer alternativement avec les deux faces radiales opposées correspondantes 176 et 178 d'une butée fixe 180 formée en vis-à-vis dans la face transversale annulaire arrière 182 du stator 22-40, et ceci pour déterminer les deux positions angulaires extrêmes du rotor 24 par rapport au stator 22-40.

Le rotor 22 est creux pour qu'il reçoive centralement la tige de commande 26 qui, en association avec le rotor 24 et le bouton de manoeuvre 38, constitue l'organe de commande manuelle.

A cet effet, il comporte un alésage central 188 qui est ouvert axialement vers l'arrière dans la face 118 et borgne à son extrémité axiale avant. Le profil de l'alésage est cylindrique à l'arrière et il se prolonge à l'avant par une fente 190 en profil en escalier. La partie axiale avant de la tige 26 est complémentaire et comporte un tronçon cylindrique 192 et un tronçon d'extrémité avant à section en escalier 194.

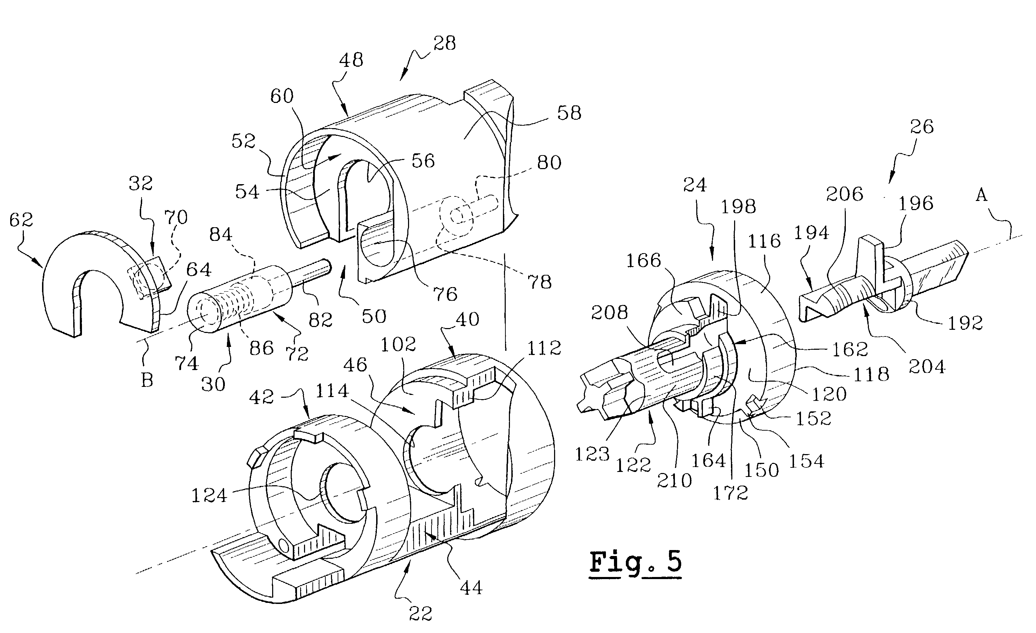

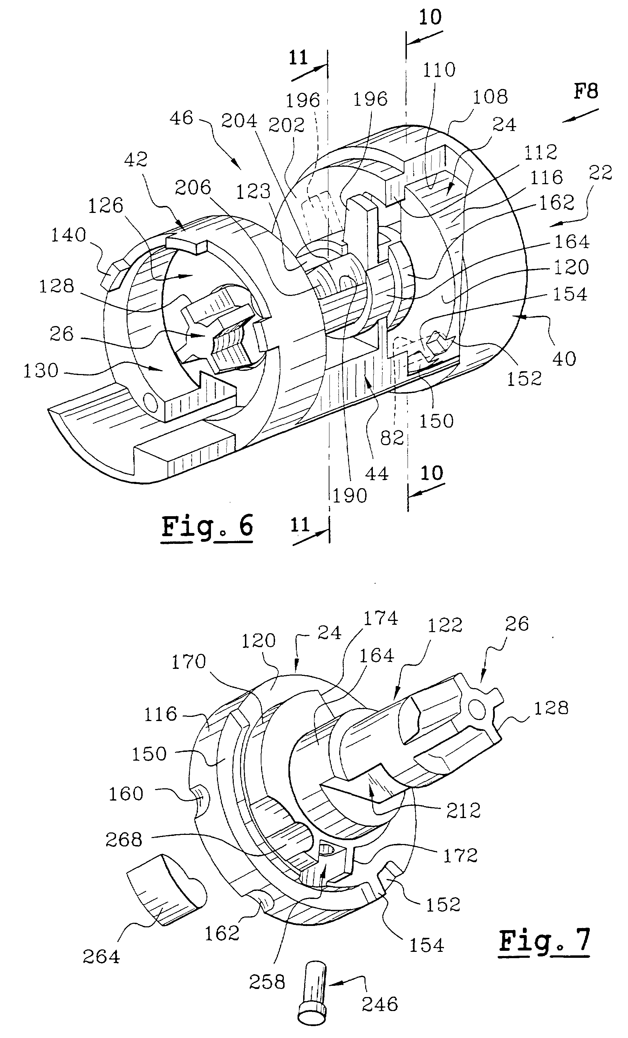

Comme on peut le voir notamment aux figures 5 et 6, la tige 26 comporte une patte radiale extérieure 196 de retenue axiale du rotor par rapport au stator.

A cet effet, le tronçon 116 comporte une fente axiale débouchante 198 pour le passage de la patte 196 lors de l'assemblage de la tige 26 dans le rotor 24. En position assemblée et montée de la tige 26 dans le rotor 24, et du rotor 24 dans le stator 22-40 (comme on peut le voir à la figure 6), la position de la patte 196, lorsque la tige de commande 26 est en position enfoncée axialement vers l'avant par rapport au rotor 24, est telle qu'elle est située en avant de la face transversale annulaire avant en vis-à-vis 202 du fond 112.

Lorsque !a tige 26 avec le bouton 38 est dans sa position angulaire extrême "STOP" illustrée à la figure 6, elle peut coulisser axialement avec le bouton de commande par rapport au rotor 24, et donc par rapport au stator 22-40, tandis que si l'on fait tourner la tige et le rotor (qui sont toujours liés en rotation dans les deux sens par la coopération des formes complémentaires 190 et 94) par rapport au stator 22, la patte est située en regard de la face 202 et il est donc impossible de tirer axialement la tige 26 vers l'arrière

Il n'existe donc ainsi qu'une seule position angulaire du bouton et de la tige 26, c'est à dire la position angulaire "STOP" de l'interrupteur 34, dans laquelle les surfaces 174 et 178 sont en butée et dans laquelle la tige 82 de l'électroaimant est en regard de l'encoche 152. Dans cette position angulaire on peut tirer axialement vers l'arrière, ou pousser axialement vers l'avant, la tige 26 entre ses deux positions axiales extrêmes illustrées aux figures 11A et 6 (ou 11B) respectivement.

Le tronçon d'extrémité avant 194 de la tige 26 qui traverse le rotor 24 comporte un tronçon axial de surface cylindrique axial convexe 204, ou flanc latéral, de même diamètre que le corps cylindrique convexe 123 de la queue 122 et qui se prolonge par une rampe axiale avant 206 inclinée radialement vers l'axe et d'arrière en avant.

Le corps 123 de la queue 122 comporte une fente axiale débouchante radialement vers l'extérieur 208 pour que les surfaces cylindrique 204 et 206 "complètent" la surface périphérique 210. De cette manière, lorsque la tige de commande 36 est dans sa position axiale enfoncée et que le rotor est dans sa position angulaire axiale extrême d'arrêt illustrée notamment aux figures 6 et 11B, la rampe 206 coopère avec la bille 70 pour la solliciter radialement vers l'extérieur, l'amener sur la portée cylindrique 204 et donc actionner le commutateur 32.

Au contraire, dans la même position angulaire du rotor, si l'on tire axialement vers l'arrière le bouton 38 et la tige de commande 26, la rampe 206 recule axialement vers l'arrière et elle n'agit plus sur la bille 70 du commutateur qui change à nouveau d'état de commutation.

Ainsi, l'enfoncement ou la traction sur la tige 26 (qui ne sont possibles que la seule position angulaire extrême d'arrêt ou position "STOP") provoque un changement d'état du commutateur 32 qui se traduit par la production d'un signal envoyé au circuit électronique porté par la plaque à circuits imprimés 62.

De la même manière, lorsque la tige 26 est dans sa position extrême axiale avant enfoncée par rapport au rotor 24 et que l'on entraîne ce dernier en rotation par rapport au stator 22-40 en quittant la position angulaire extrême d'arrêt, on provoque aussi un changement d'état du commutateur 32, et ceci en agissant sur la bille 70 qui constitue également dans ce cas l'organe de déclenchement du commutateur 32.

A cet effet, et comme on peut le voir notamment aux figures 7 et 11A à 11D, la portion de la surface cylindrique 123 qui est adjacente à la fente 208 ne s'étend angulairement que sur un faible secteur angulaire 210, ou flanc latéral, puis elle se prolonge par un lamage 212 formant un évidement dans lequel la bille 70 "chute", c'est à dire qu'elle n'est plus enfoncée radialement vers l'extérieur par la portée 204, ni par la surface 123 du secteur 210.

Ainsi, lorsque le rotor quitte sa position angulaire extrême d'arrêt illustrée aux figures 11A et 11B (après que l'électroaimant 30 ait été commandé à cet effet pour escamoter la tige 82 hors de l'encoche 152 lorsque l'utilisateur a été identifié comme étant un utilisateur autorisé) pour tourner sous l'action du bouton 38 et dans le sens horaire, la bille coopère d'abord avec la portée 210 et le commutateur ne change pas d'état, puis elle chute dans l'évidement 212 en provoquant un changement d'état du commutateur 32 qui provoque alors la libération de la tige 82 qui pénètre alors axialement vers l'avant dans la rainure 150. Le rotor peut alors par exemple atteindre son autre position angulaire extrême "DEMARRAGE" correspondant à l'actionnement du démarreur (figure 11C) et revenir ensuite en position marche (figure 11D) sous l'action du ressort 134. Tant que la tige 82 est dans la rainure 150 et qu'elle n'est pas escamotée vers l'arrière par alimentation de l'électroaimant 30, il est impossible de ramener le rotor dans sa position angulaire extrême d'arrêt (figure 11A et 11B) et ceci du fait de la présence de la cloison de butée 154 qui sépare la rainure 150 de l'encoche 152.

A cet effet, lors de course de retour, dans le sens anti-horaire en partant de la position marche de la figure 11D, la portée 210 agit sur la bille 70 et le commutateur 32 qui, après temporisation, provoque l'alimentation de l'électroaimant et donc l'effacement de la tige 82, pour permettre alors d'atteindre à nouveau la position angulaire extrême d'arrêt "STOP". Ce retrait de la tige 82 n'est possible qu'après vérification du code de l'identifiant électronique de l'utilisateur.

Les moyens d'échange et de vérification du code de l'identifiant ne sont pas représentés et sont de conception générale connue, qu'il s'agisse d'un transpondeur, associé à une antenne du véhicule, porté par le conducteur dans le cas d'un système d'antivol dit "mains libres", ou introduit dans un lecteur à bord du véhicule.

L'alimentation de l'électroaimant 30 est temporisée pour le cas ou l'utilisateur ramènerait le rotor 24 en position d'arrêt sans tirer ensuite sur le bouton 38. et donc sur la tige 26. Dans ce cas, la tige 82 de l'électroaimant 30 est à nouveau libérée dans l'encoche 152 et on ne peut plus tourner le bouton 38 dans le sens correspondant à la mise en marche du moteur et au démarrage, bien que la colonne de direction ne soit pas bloquée

Pour obtenir un tel blocage en rotation de l'arbre de la colonne de direction, qui sera explicité en détail plus avant, et en partant de la position de retour illustrée à la figure 11B, l'utilisateur tire axialement le bouton 38 et la tige de commande 26 vers l'arrière, ce qui provoque à nouveau un changement d'état du commutateur car la bille quitte la surface 204 et "chute" dans la fente 208 au droit de la rampe 206. Ce changement d'état permet de libérer à nouveau la tige 82 qui pénètre axialement vers l'arrière dans l'encoche 152. Ce retrait volontaire de la "clef" 38-26 provoque donc le blocage en rotation du rotor 24 de la clef de commande manuelle 38-24-26 et la libération du pêne 36 qui bloque en rotation la colonne de direction.

Les deux positions axiales extrêmes tirée et enfoncée de la tige 26 par rapport au rotor 24, et donc par rapport à l'antivol 22, sont indexées grâce à un ensemble bille-ressort 214 représenté à la figure 1.

Lors de l'enfoncement à nouveau du bouton en vue de provoquer la libération de la colonne de direction et en vue de permettre à cet effet la rotation du rotor 24 qui entraîne la came 132 de commande du pêne 36 et qui entraîne l'interrupteur rotatif 34, l'action sur la bille 70 (correspondant au passage de la position de la figure 11A à celle de la figure 11 B) provoque une interrogation de l'identifiant par le système d'antivol électronique en vue de vérifier que le code reçu de l'identifiant par le circuit électronique d'antivol est correct, puis provoque l'alimentation de l'électroaimant 30 dont l'alimentation est rendue possible par le circuit électronique porté par la plaque 62 qui a reçu un signal indiquant que le code est correct.

Cette alimentation est aussi temporisée de manière à bloquer à nouveau le rotor 24 dans le cas où le conducteur enfoncerait le bouton 38 sans le tourner ensuite.

L'assemblage du rotor 24 et de la tige 26 dans le stator 22-40 est ici complété par un flasque arrière 218 formant couvercle qui est serti sur le stator pour retenir axialement le rotor 24 en position montée et pour empêcher l'extraction axiale vers l'arrière de la tige 26 hors du rotor 24.

De même, lorsque ie rotor avec son tronçon arrière 116 est en position dans le stator 22-40, il bloque la cassette 28 en position montée, c'est à dire qu'il est alors impossible de l'extraire radialement hors de la cavité intermédiaire 46, et ceci du fait de la coopération de formes complémentaires comprenant notamment la surface cylindrique convexe périphérique du tronçon 116 qui s'étend en regard d'une portion de la surface cylindrique complémentaire concave 92 de la cassette 28.

On décrira maintenant le pêne 36 et ses moyens de commande.

De manière connue, l'extrémité axiale arrière 220 du corps massif du pêne 36 est reliée à une tirette axiale 222 en tôle découpée qui lui est liée axialement avec interposition d'un ressort connu 224 de "sommet de dents" pour le cas ou le pêne n'est pas en regard d'une encoche de l'arbre de la colonne de direction.

Comme on peut le voir aux figures 12A à 12D, le profil arrière 226 de la came 132 coopère avec un doigt de commande 228 porté par la face supérieure de la tirette 222 qui est sollicitée élastiquement en permanence axialement vers l'avant par un ressort hélicoïdal de compression 230 qui pousse le pêne 36 vers sa position avant sortie de blocage de l'arbre de colonne de direction représentée à la figure 14A.

Comme on peut le voir notamment aux figures 14A et suivantes, la poutre de liaison 44 est creuse pour permettre le passage de la tirette 222.

La poutre 44 délimite ainsi un couloir interne 232 de section rectangulaire dont le fond inférieur 236 comporte une rampe connue 238 qui se prolonge vers l'arrière par un méplat 240 qui coopère de manière connue avec une patte double 244 formant came de la partie arrière de la tirette 222 qui constitue aussi une patte inférieure et arrière 244 de retenue du pêne en position arrière escamotée lorsqu'elle est en arrière du méplat 240 comme illustré à la figure 14A.

La partie arrière de la tirette 222, et donc la patte 244, est poussée vers le bas en considérant la figure 14A par un doigt radial 246 de retenue du pêne qui est monté coulissant radialement dans un perçage radial 248 formé dans le tronçon arrière 49 du corps du stator 22.

La tête inférieure 252, radialement extérieure, du doigt 246 s'étend en regard de la queue arrière 254 de la tirette 222 pour empêcher celle ci de se dégager, c'est à dire pour empêcher que la patte 244 ne passe au-dessus du méplat sous l'action du ressort 230 et de l'effet de rampe résultant de l'inclinaison de la patte 244.

Le doigt de retenue 246 est maintenu radialement vers l'extérieur dans la position de retenue de la tirette, aussi appelée position anti-lâcher de pêne, tant qu'il ne peut pas remonter, radialement vers l'intérieur, sous l'action du ressort hélicoïdal de rappel de compression 256 qui le sollicite en permanence.

Le perçage 248 est formé à sa partie supérieure, radialement intérieure, dans un cylindre 258 formé dans le rotor 24 et qui débouche à son extrémité radiale intérieure pour que l'extrémité libre 260 du doigt 246 puisse coopérer ou non avec une surface correspondante en vis-à-vis 262 de la tige 46.

Ainsi, comme on peut le voir à la figure 14B, lorsque la tige est en position axiale enfoncée, le doigt est bloqué en position de retenue du pêne de même que lorsque le rotor 24, avec la tige de commande 26 enfoncée, tourne pour provoquer le démarrage du moteur du véhicule.

Par contre, comme on peut le voir en considérant successivement les figures 14B, 14C et 14A, le retrait axial vers l'arrière de la tige 26, c'est à dire l'action de "tiré" du bouton 38, provoque l'escamotage du doigt 246 et le lâcher du pêne 36 car la tirette 22 peut alors se libérer.

De manière connue, pour permettre à nouveau de libérer la colonne de direction et de verrouiller le pêne 36 et la tirette 222 en position axiale arrière, il est prévu un poussoir axial 264 escamotable vers l'arrière sous l'action de l'extrémité axiale arrière de la queue arrière 254 de la tirette 222, et ceci à l'encontre d'un ressort axial de compression 266, le poussoir étant guidé dans un logement 268 de la face transversale arrière du rotor 24.

On notera que la colonne de direction est débloquée avant d'atteindre la position angulaire indexée "ACCESSOIRES", et donc avant que le moteur ne soit mis en marche.

L'ensemble des mouvements relatifs des composants impliqués dans le retrait et le lâché du pêne 36 est illustré en référence aux figures 12A à 14C.

Du point de vue de son fonctionnement sécurisé, le système d'antivol se!on l'invention est particulièrement fiable dans la mesure où il ne fait appel à aucune énergie électrique pour maintenir le blocage en rotation du bouton 38. Le niveau d'inviolabilité de l'antivol lui-même est au moins égal à celui d'un antivol mécanique classique.

Du point de vue ergonomique, pour le conducteur, l'utilisation et la manipulation sont en tous points similaires à celles d'un antivol à clef mécanique amovible à l'exception du fait que l'organe de commande manuelle formant clef 24, 26, 38 reste à demeure en place sur la colonne de direction.

La rotation du bouton 38 n'est possible qu'après que l'identifiant électronique ait été reconnu et, dans le cas contraire, il n'est pas possible de débloquer la direction, ni de démarrer le moteur du véhicule.

Il est impossible de provoquer le lâcher du pêne 36 tant que le bouton rotatif 387 n'est pas revenu en position angulaire extrême d'arrêt, ou position "STOP".

L'intégration d'au moins une partie des composants du circuit de commande de l'électroaimant. à l'intérieur du module électronique-mécanique que constitue la cassette 28, augmente encore l'inviolabilité de l'ensemble du système d'antivol du véhicule.

En effet, ce circuit électronique "interne" au mécanisme d'antivol 20, 22, 28 nécessite d'envoyer un signal codé à l'antivol afin que, en cas de tentative d'effraction, il ne soit pas possible, en coupant les fils électriques (non représentés) de liaison et de raccordement entre l'antivol et le circuit principal de décodage, de piloter l'alimentation de l'électroaimant monostable 30 avec une simple alimentation électrique.

Afin d'accroître encore l'inviolabilité, il est possible (selon une variante non représentée) de prévoir une liaison en rotation, notamment entre le bouton et la tige, qui est fusible, c'est à dire qui se brise si l'on tente de forcer le bouton 38 en rotation alors que la rotation de l'ensemble de l'équipage tournant 38-26-24-132-34 est bloqué en rotation par la tige 82 de l'électroaimant 30.

Il est aussi possible de prévoir une liaison débrayable entre le rotor et le bouton associé à la tige, qui est commandée par l'électroaimant monostable de blocage lui-même ou par un autre électroaimant intégré à la cassette 28.

La retenue du pêne 36 et son lâcher peuvent aussi être assurés par d'autres moyens connus tels que par exemple un système à doigt basculant selon la conception connue développée par le demandeur.

Le pêne 36 peut aussi être d'orientation globalement axiale, mais en formant un angle par rapport à l'axe A avec une coque 144 conformée à cet effet.

A titre de variante, non représentée, il est possible de prévoir que la tige de l'électroaimant bloque l'équipage tournant 38-26-24-132-34 en rotation en étant reçue dans une encoche 152, associée à une rainure 150, formée par exemple dans la came 132, l'agencement de l'électro-aimant 30 étant notamment inversé de manière que sa tige fasse saillie axialement vers l'avant.

L'indexation des différentes positions angulaires de l'équipage tournant 38-26-24-132-34 peut lui aussi être effectué par coopération avec la périphérie cylindrique de la came de commande du retrait du pêne.

En fonction du type de colonne de direction, et donc des différentes dimensions et encombrements, la plaque à circuits imprimés peut aussi être agencée globalement parallèlement aux axes A et B.

Dans le cas où le système d'identification, par exemple du type "mains libres", serait défaillant, il est possible de prévoir une solution de secours (non représentée) faisant appel à une antenne de secours de conception connue aménagée dans le corps de l'antivol 20 au voisinage de sa face transversale d'extrémité arrière.

Cette antenne permet alors la lecture par échange avec un transpondeur-identifiant de secours contenu dans un élément dont la forme générale est celle d'une clef mécanique dont on introduit axialement la tige avant dans un trou axial prévu à cet effet dans le bouton 38 de manipulation.

Ainsi, on positionne correctement le transpondeur de secours par rapport à l'antenne.

On prévoit alors de plus que l'identifiant de secours reçu dans l'antivol ne peut être extrait hors de ce dernier tant que le bouton 38, et donc l'équipage tournant 38-26-24-132-34, n'est pas revenu en position angulaire "STOP" et/ou tant que le bouton 38 n'a pas été ramené axialement vers l'arrière en position tirée.

Il est aussi possible de remplacer l'électroaimant monostable par un moteur électrique qui entraîne un élément de blocage en rotation de l'équipage tournant.

## Revendications

1. Système d'antivol de véhicule automobile du type comprenant un mécanisme d'antivol (20) comportant un boîtier (22, 144) dans lequel un organe (24, 26, 38) de commande manuelle du démarrage du moteur du véhicule et du verrouillage de la colonne de direction du véhicule
_ est monté mobile axialement (26, 38) entre une position, arrière tirée, de verrouillage de la colonne de direction et une position, avant poussée, de déverrouillage de la colonne de direction,
_ est monté à rotation (24, 26, 38) entre au moins une position angulaire de repos et une position angulaire d'utilisation, dans laquelle dans laquelle il ne peut être tiré axialement vers l'arrière,
_ est lié en rotation à un organe de sortie rotatif (132) formant came qui est susceptible de coopérer avec un doigt de commande (228) porté par un pêne (36) pour commander les déplacements de ce dernier qui est monté coulissant par rapport au boîtier (22, 144), entre une position sortie d'antivol vers laquelle il est sollicité élastiquement (230) et dans laquelle il fait saillie à travers une ouverture du boîtier (22, 144) pour bloquer en rotation un organe de la colonne de direction lorsque l'organe de commande (24, 26, 38) est en position angulaire de repos et en position arrière tirée de verrouillage, et une position rentrée escamotée à l'intérieur du boîtier,
_ et est lié en rotation à un ensemble commutateur/interrupteur (34)
**caractérisé en ce qu'**il comprend une unité d'identification d'un utilisateur autorisé du véhicule qui, à l'issue d'une étape d'interrogation et d'identification, émet un signal codé d'antivol, et **en ce que** le mécanisme (20) d'antivol comporte :
- un organe motorisé (30), notamment électromagnétique, de blocage en rotation de l'organe de commande (24, 26, 38) par rapport au boîtier (22, 28) dont la libération est commandée lorsqu'un signal codé d'antivol est fourni par l'unité d'identification à un circuit électronique de commande de l'organe de blocage ;
- et un commutateur (32, 70), de déclenchement d'une étape d'interrogation et d'identification, qui est porté par le boîtier (22, 28, 62) et qui est déclenché par l'organe de commande manuelle (24, 26).

2. Système d'antivol de véhicule automobile selon la revendication précédente, **caractérisé en ce que** l'organe de commande manuelle (26) comporte une rampe inclinée axialement (206, 204) de commande du commutateur (32, 70) de déclenchement qui agit sur un organe (70) d'actionnement de ce dernier (32) lorsque l'organe de commande manuelle (26, 38) est enfoncé ou tiré axialement entre ses deux positions axiales extrêmes arrière tirée de verrouillage et avant poussée de déverrouillage.

3. Système selon la revendication précédente, **caractérisé en ce qu'**il est prévu des moyens (214) d'indexation axiale de l'organe de commande manuelle (26, 38) dans chacune de ses deux postions axiales extrêmes.

4. Système d'antivol de véhicule automobile selon l'une quelconque des revendications précédentes, **caractérisé en ce que** le commutateur de déclenchement (32) comporte un organe d'actionnement (70) sur lequel agit l'organe de commande manuelle (24, 26) lorsqu'il est entraîné en rotation depuis sa position angulaire extrême de repos vers sa position d'utilisation, ou dans le sens inverse.

5. Système d'antivol selon la revendication 4 prise ne combinaison avec l'une des revendications 2 ou 3, **caractérisé en ce que** l'organe d'actionnement est une bille (70) d'actionnement avec laquelle coopère la rampe de commande (204, 206) ou un flanc latéral (210, 212) de l'organe de commande (24, 26).

6. Système d'antivol selon la revendication précédente, **caractérisé en ce que** la rampe de commande (206) se prolonge axialement vers l'arrière par un palier cylindrique (204) parallèle à l'axe et qui est délimité latéralement par ledit flanc latéral (210)

7. Système d'antivol selon l'une quelconque des revendications précédentes, **caractérisé en ce que** l'organe de commande comporte un rotor (24) qui est monté tournant par rapport au boîtier formant stator (22), entre deux positions angulaires extrêmes dont l'une correspond à ladite position angulaire de repos, et qui est immobilisé axialement par rapport au stator, et une tige (26) de commande qui est montée coulissante axialement par rapport au rotor (24), auquel elle est liée en rotation, entre une position arrière tirée de verrouillage et une position extrême avant de déverrouillage.

8. Système d'antivol selon la revendication précédente prise en combinaison avec la revendication 2, **caractérisé en ce que** ladite rampe (206) est formée sur la tige de commande (26, 122).

9. Système selon l'une quelconque des revendications 7 ou 8 prise en combinaison avec la revendication 3, **caractérisé en ce qu'**il est prévu des moyens (214) d'indexation axiale de la tige de commande (26) par rapport au rotor (24) dans chacune de ses deux postions axiales extrêmes.

10. Système d'antivol selon l'une quelconque des revendications 7 à 9, **caractérisé en ce que** la tige de commande (26) comporte un doigt radial (196) de retenue axiale de la tige de commande (26) en position avant poussée qui, lorsque le rotor (24) quitte sa position angulaire de repos, s'étend en regard d'une face transversale annulaire avant (202) de butée du stator (22, 40) pour empêcher le recul axial vers l'arrière de la tige de commande (26) et qui, lorsque le rotor (24) est dans sa position angulaire de repos, est en regard d'une rainure axiale complémentaire (198) de manière à permettre les déplacements axiaux de la tige de commande (26) dans les deux sens, entre ses deux positions axiales extrêmes

11. Système d'antivol selon l'une quelconque des revendications 7 à 10, **caractérisé en ce que** l'organe électromagnétique (30) de blocage en rotation de l'organe de commande (24, 26, 38) coopère avec le rotor (24, 152) pour le bloquer en rotation.

12. Système d'antivol selon l'une quelconque des revendications précédentes, **caractérisé en ce que** l'organe électromagnétique de blocage est un électroaimant (30) d'orientation axiale (B) dont le noyau (84) est sollicité élastiquement en position sortie par un ressort (86) de rappel de manière à être reçu dans au moins une encoche (152) de blocage formé dans un élément (24, 112) lié en rotation avec l'organe de commande manuelle (24, 26, 38) lorsque ce dernier est dans sa position angulaire de repos, et **en ce qu'**il est susceptible d'être rappelé électromagnétiquement en position rentrée de manière à libérer l'organe de commande manuelle (24, 26, 38) en rotation.

13. Système d'antivol selon la revendication précédente prise en combinaison avec la revendication 11, **caractérisé en ce que** l'encoche de blocage (152) est formée dans une face annulaire avant (120) du rotor (24) de l'organe de commande manuelle (24, 26, 38).

14. Système d'antivol de véhicule automobile selon la revendication précédente, **caractérisé en ce que** l'organe électromagnétique de blocage (30) et le commutateur de déclenchement (32) appartiennent à un sous-ensemble (28, 62) constituant une partie démontable du boîtier (22)

15. Système d'antivol selon la revendication précédente, **caractérisé en ce que** la partie démontable (28) est de forme générale annulaire et est traversée axialement en son centre par l'organe de commande manuelle ( 24, 26)

16. Système d'antivol selon la revendication précédente, **caractérisé en ce que** la partie démontable (28) comporte une plaque à circuits imprimés (62) en forme d'anneau plat d'orientation transversale qui porte ledit commutateur (32) et l'organe électromagnétique (30) de blocage

17. Système d'antivol selon l'une quelconque des revendications précédentes, **caractérisé en ce que** le pêne (36) est monté coulissant axialement parallèlement (C) à la direction (A) de déplacement axial de l'organe de commande manuelle (26).

18. Système d'antivol selon l'une quelconque des revendications précédentes, **caractérisé en ce que** le pêne est monté coulissant selon une direction globalement radiale par rapport à la direction de déplacement axial de l'organe de commande manuelle.

19. Système d'antivol selon la revendication 7, **caractérisé en ce que** l'extrémité axiale arrière de la tige de commande (26) est liée en translation axiale et en rotation avec un bouton de manoeuvre (38) par des moyens fusibles sous l'action d'un couple de valeur déterminée.

## Patentansprüche

1. Diebstahlsicherungssystem für Kraftfahrzeuge, vom Typ mit einem Diebstahlsicherungsmechanismus (20), der ein Gehäuse (22, 144) enthält, in dem ein manuelles Steuerglied (24, 26, 38) zum Starten des Fahrzeugmotors und zum Verriegeln der Lenksäule des Fahrzeugs vorgesehen ist, welches Glied
- zwischen einer hinteren, ausgezogenen Stellung zum Verriegeln der Lenksäule und einer vorderen, eingedrückten Stellung zum Entriegeln der Lenksäule axial verstellbar gelagert ist (26, 38),
- zwischen mindestens einer Ruhewinkelstellung und einer Gebrauchswinkelstellung drehbar gelagert ist (24, 26, 38), in welcher es nicht axial nach hinten ausgezogen werden kann,
- mit einem drehbaren nockenartigen Austrittsglied (132) drehfest verbunden ist, das mit einem Steuerfinger (228) zusammenwirken kann, der von einem Riegel (36) abgestützt wird, um die Verlagerungen desselben zu steuern, der gegenüber dem Gehäuse (22, 144) zwischen einer ausgefahrenen Diebstahlsicherungsstellung, in die er elastisch beaufschlagt wird (230) und in der er aus einer Öffnung des Gehäuses (22, 144) herausragt, um ein Glied der Lenksäule drehfest zu arretieren, wenn das Steuerglied (24, 26, 38) sich in Ruhewinkelstellung und in der hinteren, ausgezogenen Verriegelungsstellung befindet, und einer ins Innere des Gehäuses eingeklappten Einfahrstellung gleitbeweglich gelagert ist,
- mit einer Schaltereinheit (34) drehfest verbunden ist,
**dadurch gekennzeichnet, dass** es eine Einrichtung zum Identifizieren eines autorisierten Fahrzeugbenutzers enthält, die am Ende einer Abfrage- und Identifikationsphase ein codiertes Diebstahlsicherungssignal ausgibt,
und dass der Diebstahlsicherungsmechanismus (20) enthält:
- ein insbesondere elektromagnetisches Antriebsglied (30) zur Dreharretierung des Steuerglieds (24, 26, 38) gegenüber dem Gehäuse (22, 28), dessen Freigabe dann gesteuert wird, wenn ein codiertes Diebstahlsicherungssignal von der Identifikationseinrichtung an eine elektronische Schaltung zum Steuern des Arretierglieds abgegeben wird,
- und einen Schalter (32, 70) zum Auslösen einer Abfrage- und Identifikationsphase, der vom Gehäuse (22, 28, 62) abgestützt und vom manuellen Steuerglied (24, 26) ausgelöst wird.

2. Kraftfahrzeug-Diebstahlsicherungssystem nach dem vorangehenden Anspruch, **dadurch gekennzeichnet, dass** das manuelle Steuerglied (26) eine axial geneigte Rampe (206, 204) zum Steuern des Auslöseschalters (32, 70) enthält, die auf ein Glied (70) zum Betätigen desselben (32) einwirkt, wenn das manuelle Steuerglied (26, 38) zwischen den beiden axialen Endstellungen, nämlich der hinteren, ausgezogenen Verriegelungsstellung und der vorderen, eingedrückten Entriegelungsstellung axial eingedrückt bzw. ausgezogen wird.

3. System nach dem vorangehenden Anspruch, **dadurch gekennzeichnet, dass** Mittel (214) zur axialen Indexierung des manuellen Steuerglieds (26, 38) jeweils in den beiden axialen Endstellungen vorgesehen sind.

4. Kraftfahrzeug-Diebstahlsicherungssystem nach einem der vorangehenden Ansprüche, **dadurch gekennzeichnet, dass** der Auslöseschalter (32) ein Betätigungsglied (70) enthält, auf welches das manuelle Steuerglied (24, 26) einwirkt, wenn es aus seiner Ruhewinkelendstellung in seine Gebrauchsstellung oder umgekehrt drehend mitgenommen wird.

5. Diebstahlsicherungssystem nach Anspruch 4 in Kombination mit einem der Ansprüche 2 oder 3, **dadurch gekennzeichnet, dass** das Betätigungsglied eine Betätigungskugel (70) ist, mit der die Steuerrampe (204, 206) oder eine Seitenflanke (210, 212) des Steuerglieds (24, 26) zusammenwirkt.

6. Diebstahlsicherungssystem nach dem vorangehenden Anspruch, **dadurch gekennzeichnet, dass** die Steuerrampe (206) über ein zylindrisches Lager (204) axial nach hinten ragt, das parallel zur Achse verläuft und seitlich von der genannten Seitenflanke (210) begrenzt wird.

7. Diebstahlsicherungssystem nach einem der vorangehenden Ansprüche, **dadurch gekennzeichnet, dass** das Steuerglied einen Rotor (24) enthält, der gegenüber einem Statorgehäuse (22) zwischen zwei Winkelendstellungen drehbar gelagert ist, von denen die eine der genannten Ruhewinkelstellung entspricht, und der gegenüber dem Stator axial festgelegt wird, sowie eine Steuerstange (26), die gegenüber dem Rotor (24), mit dem sie drehfest verbunden ist, zwischen einer hinteren, ausgezogenen Verriegelungsstellung und einer vorderen Entriegelungsendstellung axial gleitbeweglich gelagert ist.

8. Diebstahlsicherungssystem nach dem vorangehenden Anspruch in Kombination mit Anspruch 2, **dadurch gekennzeichnet, dass** die genannte Rampe (206) an der Steuerstange (26, 122) gebildet ist.

9. System nach einem der Ansprüche 7 oder 8 in Kombination mit Anspruch 3, **dadurch gekennzeichnet, dass** Mittel (214) zur axialen Indexierung der Steuerstange (26) gegenüber dem Rotor (24) jeweils in ihren beiden axialen Endstellungen vorgesehen sind.

10. Diebstahlsicherungssystem nach einem der Ansprüche 7 bis 9, **dadurch gekennzeichnet, dass** die Steuerstange (26) einen radialen Finger (196) zum axialen Festhalten der Steuerstange (26) in der nach vorne ausgezogenen Stellung enthält, der dann, wenn der Rotor (24) seine Ruhewinkelstellung verlässt, sich gegenüber einer quer verlaufenden, ringförmigen, vorderen Anschlagsfläche (202) des Stators (22, 40) erstreckt, um das axiale Zurücksetzen der Steuerstange (26) nach hinten zu verhindern, und der dann, wenn der Rotor (24) sich in seiner Ruhewinkelstellung befindet, einer axialen Gegennut (198) gegenüberliegt, so dass axiale Verlagerungen der Steuerstange (26) zwischen ihren beiden axialen Endstellungen in beiden Richtungen möglich sind.

11. Diebstahlsicherungssystem nach einem der Ansprüche 7 bis 10, **dadurch gekennzeichnet, dass** das elektromagnetische Glied (30) zur Dreharretierung des Steuerglieds (24, 26, 38) mit dem Rotor (24, 152) zusammenwirkt, um diesen drehfest zu arretieren.

12. Diebstahlsicherungssystem nach einem der vorangehenden Ansprüche, **dadurch gekennzeichnet, dass** das elektromagnetische Arretierglied ein Elektromagnet (30) mit axialer Ausrichtung (B) ist, dessen Kern (84) über eine Rückstellfeder (86) elastisch in die Ausfahrstellung so beaufschlagt wird, dass er in zumindest einer Arretiersaussparung (152) aufgenommen wird, die in einem Element (24, 112) ausgeführt ist, welches mit dem manuellen Steuerglied (24, 26, 38) drehfest verbunden ist, wenn letzteres sich in seiner Ruhewinkelstellung befindet, und dass er elektromagnetisch in die Einfahrstellung zurückgesetzt werden kann, so dass er das manuelle Steuerglied (24, 26, 38) drehbar freigibt.

13. Diebstahlsicherungssystem nach dem vorangehenden Anspruch in Kombination mit Anspruch 11, **dadurch gekennzeichnet, dass** die Arretieraussparung (152) in einer ringförmigen Vorderseite (120) des Rotors (24) des manuellen Steuerglieds (24, 26, 38) ausgeführt ist.

14. Kraftfahrzeug-Diebstahlsicherungssystem nach dem vorangehenden Anspruch, **dadurch gekennzeichnet, dass** das elektromagnetische Arretierglied (30) und der Auslöseschalter (32) zu einer Untereinheit (28, 62) gehören, die einen abnehmbaren Teil des Gehäuses (22) bildet.

15. Diebstahlsicherungssystem nach dem vorangehenden Anspruch, **dadurch gekennzeichnet, dass** der abnehmbare Teil (28) insgesamt ringförmig ist und in seiner Mitte axial vom manuellen Steuerglied (24, 26) durchsetzt wird.

16. Diebstahlsicherungssystem nach dem vorangehenden Anspruch, **dadurch gekennzeichnet, dass** der abnehmbare Teil (28) eine Leiterplatte (62) in Form eines flachen Rings mit querverlaufender Ausrichtung enthält, die den genannten Schalter (32) und das elektromagnetische Arretierglied (30) abstützt.

17. Diebstahlsicherungssystem nach einem der vorangehenden Ansprüche, **dadurch gekennzeichnet, dass** der Riegel (36) parallel (C) zur axialen Verlagerungsrichtung (A) des manuellen Steuerglieds (26) axial gleitbeweglich gelagert ist.

18. Diebstahlsicherungssystem nach einem der vorangehenden Ansprüche, **dadurch gekennzeichnet, dass** der Riegel in einer insgesamt radialen Richtung gegenüber der axialen Verlagerungsrichtung des manuellen Steuerglieds gleitbeweglich gelagert ist.

19. Diebstahlsicherungssystem nach Anspruch 7, **dadurch gekennzeichnet, dass** das axiale hintere Ende der Steuerstange (26) axial verschiebefest und drehfest mit einem Bedienknopf (38) über Mittel verbunden ist, die unter der Wirkung eines Moments mit bestimmtem Wert schmelzbar sind.

## Claims

1. A motor vehicle anti-theft system of the type comprising an anti-theft mechanism (20) having a casing (22, 144), in which a manual control member (24, 26, 38) for the starting of the engine of the vehicle and locking of the steering column of the vehicle
- is mounted for axial movement (26, 38) between a backward or pull-out position for locking the steering column and a forward or push-in position for unlocking the steering column,
- is mounted for rotation (24, 26, 38) between at least one angular rest position and an angular working position, in which it cannot be pulled axially backwards,
- is coupled in rotation to a rotary output member (132) defining a cam, which is arranged to cooperate with a control finger (228) carried by a bolt (36) in order to control the displacements of the latter, which is mounted for sliding movement with respect to the casing (22, 144) between a deployed anti-theft position, towards which it is biased elastically (230) and in which it projects through an aperture in the casing (22, 144), whereby to block a component of the steering column against rotation when the control member (24, 36, 38) is in an angular rest position and in the backward or pull-out locking position, and a retracted position within the casing,
- and is coupled in rotation to an assembly comprising a switch/interrupter (34),
**characterised in that** it includes a unit for identifying an authorised user of the vehicle, which, at the end of an interrogation and identification step, emits a coded anti-theft signal,
and **in that** the anti-theft mechanism (20) comprises:
- a motorised member (30), in particular an electromagnetic member, for blocking the control member (24, 26, 38) against rotation with respect to the casing (22, 28), the release of which is commanded when a coded anti-theft signal is supplied by the identification unit to an electronic circuit for controlling the blocking member;
- and a switch (32, 70), for initiating a step of interrogation and identification, which is carried by the casing (22, 28, 62) and which is initiated by the manual control member (24, 26).

2. A motor vehicle anti-theft system according to Claim 1, **characterised in that** the manual control member (26) comprises an axially inclined ramp (206, 204) for controlling the initiating switch (32, 70) which acts on a member (70) for actuation of the latter (32) when the manual control member (26, 38) is pushed in or pulled out axially between its two terminal axial positions, namely its backward or pull-out locking position and its forward or push-in unlocking position.

3. A system according to Claim 2, **characterised in that** means (214) are provided for axially indexing the manual control member (26, 38) in each of its two terminal axial positions.

4. A motor vehicle anti-theft system according to any one of the preceding Claims, **characterised in that** the initiating switch (38) includes an actuating member (70) on which the manual control member (24, 26) acts when it is driven in rotation from its terminal angular rest position to its working position or in the opposite direction.

5. An anti-theft system according to Claim 4 taken in combination with Claim 2 or Claim 3, **characterised in that** the actuating member is an actuating ball (70), with which the control ramp (204, 206), or a lateral flank (210, 212) of the control member (24, 26), co-operates.

6. An anti-theft system according to Claim 5, **characterised in that** the control ramp (206) is extended axially towards the rear by a cylindrical bearing (204) parallel to the axis and delimited laterally by the said lateral flank (210).

7. An anti-theft system according to any one of the preceding Claims,
**characterised in that** the control member comprises a rotor (24) which is mounted for rotation with respect to the casing that constitutes a stator (22), between two terminal angular positions one of which corresponds to the said angular rest position, and which is immobilised axially with respect to the stator, and a control rod (26) which is mounted for axial sliding movement with respect to the rotor (24), with which it is coupled in rotation, between a backward or pull-out locking position and a forward or unlocking terminal position.

8. An anti-theft system according to Claim 7 taken in combination with Claim 2, **characterised in that** the said ramp (206) is formed on the control rod (26, 122).

9. A system according to Claim 7 or Claim 8, taken in combination with Claim 3, **characterised in that** means (214) are provided for the axial indexing of the control rod (26) with respect to the rotor (24) in each of its two terminal axial positions.

10. An anti-theft system according to any one of Claims 7 to 9, **characterised in that** the control rod (26) includes a radial finger (196) for axial retention of the control rod (26) in its forward or push-in position, which, when the rotor (24) quits its angular rest position, lies facing an annular front transverse abutment face (202) of the stator (22, 40) whereby to prevent axial rearward return of the control rod (26), and which, when the rotor (24) is in its angular rest position, is in facing relationship with a complementary axial groove (198), whereby to permit the axial displacements of the control rod (26) in both directions between its two terminal axial positions.

11. An anti-theft system according to any one of Claims 7 to 10, **characterised in that** the electromagnetic member (30), for blocking the control member (24 - 26, 38) against rotation, is in cooperation with the rotor (24, 152) to block it against rotation.

12. An anti-theft system according to any one of the preceding Claims, **characterised in that** the electromagnetic blocking member is an electromagnet (30) oriented axially (B), the core (84) of which is biased elastically to a deployed position by a return spring (86), whereby to be received in at least one stop notch (152) formed in an element (24, 112) which is coupled in rotation with the manual control member (24, 26, 38) when the latter is in its angular rest position, and **in that** it is adapted to be returned electromagnetically to its retracted position whereby to release the manual control member (24, 26, 38) for rotation.

13. An anti-theft system according to Claim 12 taken in combination with Claim 11, **characterised in that** the stop notch (152) is formed in an annular front face (120) of the rotor (24) of the manual control member (24, 26, 38).

14. A motor vehicle anti-theft system according to Claim, 13,
**characterised in that** the electromagnetic blocking member (30) and the initiating switch (32) are part of a sub-assembly (28, 62) constituting a removable part of the casing (22).

15. An anti-theft system according to Claim 14, **characterised in that** the removable part (28) is of generally annular form, and the manual control member (24, 26) extends axially through its centre.

16. An anti-theft system according to Claim 15, **characterised in that** the removable part (28) comprises a printed circuit board (62) in the form of a transversely oriented flat annular ring, which carries the said switch (32) and the electromagnetic blocking member (30).

17. An anti-theft system according to any one of the preceding Claims, **characterised in that** the bolt (36) is mounted for axial sliding movement (C) parallel to the direction (A) of axial displacement of the manual control member (26).

18. An anti-theft device according to any one of the preceding Claims, **characterised in that** the bolt is mounted for sliding movement in a generally radial direction with respect to the direction of axial displacement of the manual control member.

19. An anti-theft system according to Claim 7, **characterised in that** the axial rear end of the control rod (26) is coupled in axial translation and rotation with a manoeuvring button (38), through means which are frangible under the action of a torque of predetermined value.
